Europäisches Patentamt

European Patent Office

Office européen des brevets

(19)

(11) Publication number: **0 030 037**
**B1**

(12) **EUROPEAN PATENT SPECIFICATION**

(45) Date of publication of patent specification: **10.04.85**

(51) Int. Cl.⁴: **H 04 B 3/14**

(21) Application number: **80107562.3**

(22) Date of filing: **03.12.80**

(54) Amplitude equalizer, particularly for use in a signal transmission system.

(30) Priority: **03.12.79 JP 156609/79**
**03.12.79 JP 156610/79**

(43) Date of publication of application:
**10.06.81 Bulletin 81/23**

(45) Publication of the grant of the patent:
**10.04.85 Bulletin 85/15**

(84) Designated Contracting States:
**DE FR GB**

(56) References cited:
**GB-A- 713 224**
**GB-A- 785 621**
**US-A-2 444 063**

(73) Proprietor: **NEC CORPORATION**
**33-1, Shiba 5-chome, Minato-ku**
**Tokyo 108 (JP)**

(72) Inventor: **Ryu, Toshihiko**
**c/o Nippon Electric Co. Ltd. 33-1, Shiba**
**Gochome**
**Minato-ku Tokyo 108 (JP)**
Inventor: **Koizumi, Yutaka**
**c/o Nippon Electric Co. Ltd. 33-1, Shiba**
**Gochome**
**Minato-ku Tokyo 108 (JP)**

(74) Representative: **Vossius Vossius Tauchner**
**Heunemann Rauh**
**Siebertstrasse 4 P.O. Box 86 07 67**
**D-8000 München 86 (DE)**

## Description

A signal transmission system requires amplitude equalization to realize desired transmission characteristics. As an equalizer of this kind, the transversal filter described in "Principles of Data Communications", MacGraw-Hill, 1968, Chapter 6, has been well known. This filter comprises a plurality of delay lines and means for synthesizing a signal from each tap of the delay lines with a predetermined weighting. This type of equalizer, however, has drawbacks in that the required circuit network would become enormous as the number of taps increases since the gain of each tap must be controlled, and in that the delay time in each delay line should be selected to be equal to the inverse number of the data transmission rate. This equalizer, therefore, could not be utilized in a system wherein the transmission rate is close to the inverse number of the delay time, and thus its use was limited.

An improved equalizer has been also proposed in a co-pending U.S. Pat. application Serial No. 29,503, filed on April 12, 1979 by the same assignee as this application. This amplitude equalizer includes a phase shift circuit and two variable attenuators.

US—A—2444063 discloses the attenuation and envelope-delay equalization of waves transmitted over transmission lines. Equalized signals are produced by branching the input signals into a first signal and a second signal which has an effective delay time twice as long as the delay time of the first signal. The second signal is attenuated, and the processed signals are combined to produce equalized signals. However, there may arise some problems in equalizing the amplitude distortions of various types.

An object of the present invention is to provide an amplitude equalizer which equalizes amplitude distortions of various types without any delay distortion, and which requires only a small-sized circuit network.

The present invention is particularly characterized by the features of the claims.

The aforementioned object and the features of the present invention will become more apparent by reference to the following description taken in conjunction with the attached drawings, in which:

Fig. 1 is a block diagram of an embodiment of a variable equalizer according to the present invention;

Fig. 2 shows amplitude characteristic curves in the case where the delay is kept at a constant value and the amplitude factor or attenuation factor is varied;

Fig. 3 shows an embodiment of the variable circuit 6 of Fig. 1;

Fig. 4 is a block diagram of an embodiment of an automatic equalizer according to the present invention;

Fig. 5 is a block diagram of an embodiment of the control circuit shown in Fig. 4;

Fig. 6 shows characteristic curves of the filters 10 to 12 shown in Fig. 5; and

Fig. 7 is a block diagram of another embodiment of a variable equalizer according to the present invention.

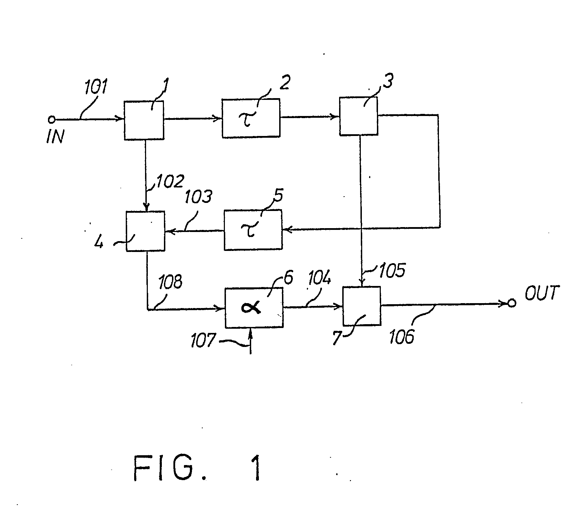

In Fig. 1 the reference numerals 1 and 3 denote branching circuits; 4 and 7, combining circuits; 2 and 5, delay circuits having an identical delay time; and 6, a circuit for varying the signal polarities and the signal amplitude.

Where the input signal fed to the input terminal 101 is $e^{j\omega t}$, the delay time in the delay circuits 2 and 5 is $\tau$, the amplification or attenuation factor in the circuit 6 is $\alpha$ and signals at the points 104 and 105 are respectively $A_1$ and $B_1$, the relation therebetween can be given by

$$A_1 = \alpha\{e^{j\omega t} + e^{j\omega(t-2\tau)}\} \qquad (1)$$

$$B_1 = e^{j\omega(t-\tau)} \qquad (2)$$

Therefore, the signal at the tap 106 will be given by

$$C_1 = A_1 + B_1 = e^{j\omega(t-\tau)}\text{x}\ \{1 + \alpha(e^{j\omega\tau} + e^{-j\omega\tau}\}$$
$$= e^{j\omega t}\text{x}\ e^{-j\omega\tau}\{1 + 2\alpha\ \cos\ \omega\tau\} \qquad (3)$$

Accordingly, the transmission characteristics (transfer function) $T_1(\omega)$ can be expressed by the following equation:

$$T_1(\omega) = (1 + 2\alpha\ \cos\ \omega\tau)e^{-j\omega\tau} \qquad (4)$$

If it is assumed that the characteristic functions of amplitude, phase and delay time are respectively $S_1(\omega)$, $\theta_1(\omega)$ and $D_1(\omega)$, the relation therebetween is given by

$$T_1(\omega) = S_1(\omega) \cdot e^{-j\theta_1(\omega)} \qquad (5)$$

$$S_1(\omega) = 1 + 2\alpha\ \cos\ \omega\tau \qquad (6)$$

$$\theta_1(\omega) = -\omega\tau \qquad (7)$$

$$D_1(\omega) = -\ \frac{d\theta_1(\omega)}{d\omega}\ = \tau(\text{constant}) \qquad (8)$$

In the above equation, although $S_1(\omega)$ is changed by varying $\alpha$, $D_1(\omega)$ will be always constant irrespective of $\alpha$ and $\omega$, therefore generating no delay distortions. In other words, without causing any delay distortions at all, the amplitude vs. frequency characteristics alone can be equalized.

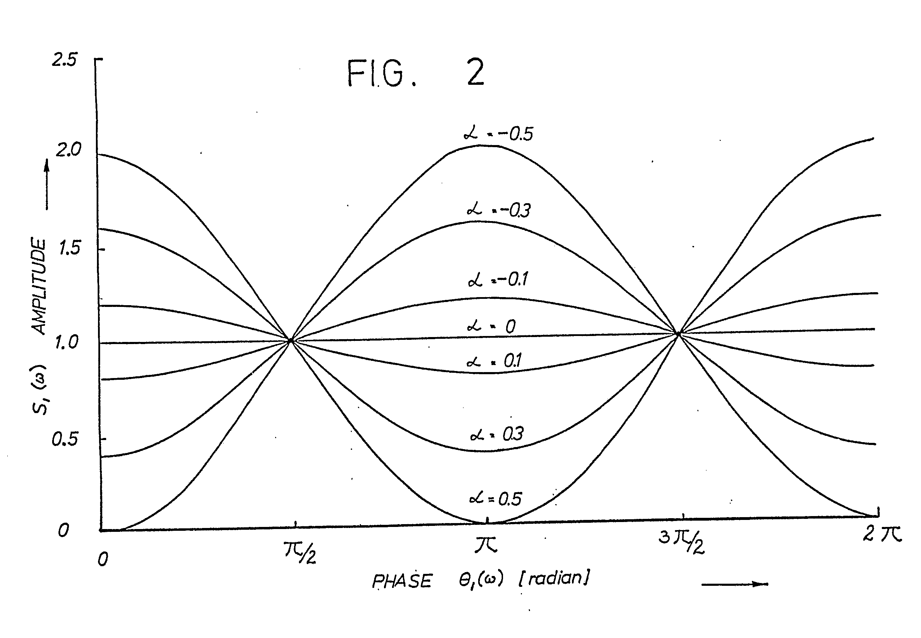

Fig. 2 shows the variation of $S_1(\omega)$ when $\alpha$ increases from $-0.5$ to $0.5$. The zones of 0 to $\pi$, and $\pi$ to $2\pi$ are the regions usable as positive/negative linear slope equalizers and the zones of $\pi/2$ to $3\pi/2$ are the regions usable as positive/negative secondary or higher order curvature equalizers. For example, when an amplitude equalizer usable in a frequency band (band zone) is designed, assuming that the center frequency of the frequency band zone is fo, $\tau$ value satisfying

$$\tau_1 = \frac{1}{4fo}$$

may be chosen as the equalizer for generating the linear slope distortion and $\tau$ satisfying

$$\tau_2 = \frac{1}{2fo}$$

may be chosen as the one for generating the secondary or higher order curvature distortion. As clearly shown in the graph, by simply varying $\alpha$ amplitude distortion of bipolarity can be generated.

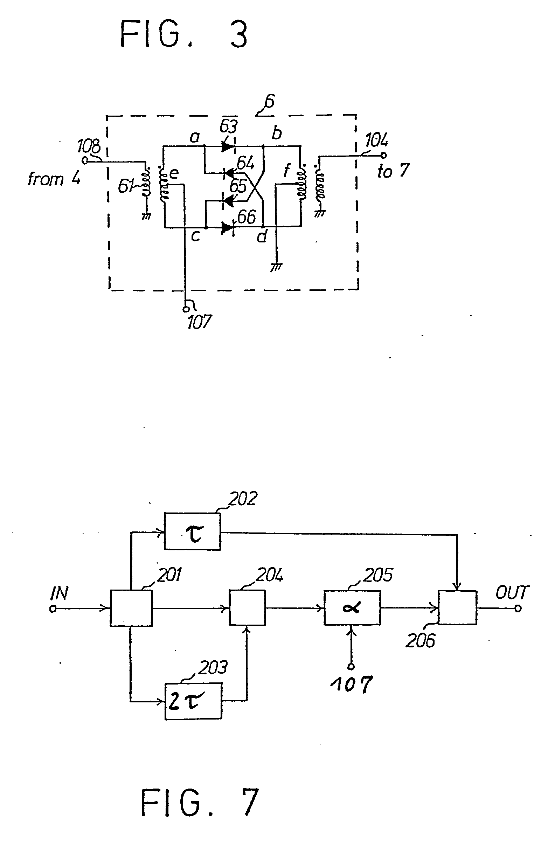

The circuit 6 shown in Fig. 3 is a balanced mixer comprising transformers 61 and 62 and diodes 63 to 66. When a control voltage of a positive polarity is fed to a terminal 107, diodes 63 and 66 are turned "ON" to form a loop

$$(e \rightarrow a \rightarrow b \rightarrow f \rightarrow d \rightarrow c \rightarrow e)$$

and the input signal to a terminal 108 is either amplified or attenuated to be output to a terminal 104. The outgoing signal has a polarity identical with that of the incoming signal. When the control voltage of a negative polarity is supplied subsequently, diodes 64 and 65 are turned "ON" to form a loop

$$(e \rightarrow a \rightarrow d \rightarrow f \rightarrow c \rightarrow e)$$

and the polarities of the output signal become inverted. The level of the output signal is determined according to the level of the control voltage. Thus circuit 6 is the circuit which varies the polarity and the amplitude. However, it may be a circuit which varies amplitude alone such as a variable attenuator or a variable amplifier, depending on the amplitude distortion in the radio path.

The present invention may readily be extended to an automatic amplitude equalizing circuit.

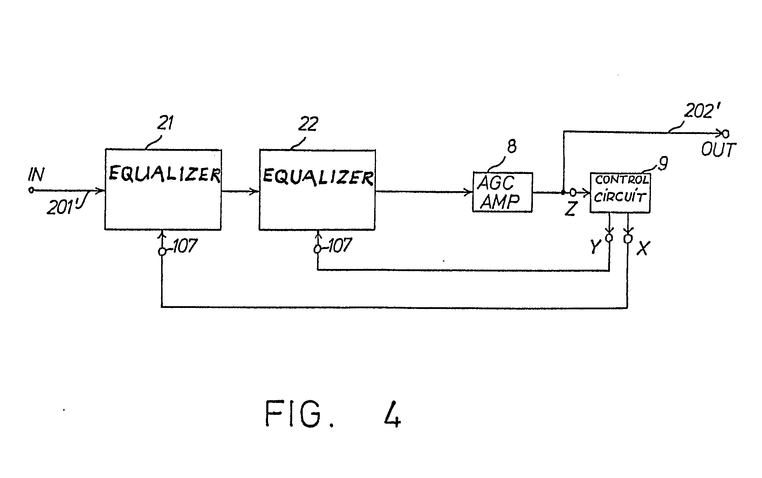

In Fig. 4, each of the circuits 21 and 22 is identical with the equalizer shown in Fig. 1; this device can be used to equalize the linear slope or secondary or higher order curvature distortions by selecting appropriate $\tau$ values. The reference numeral 8 denotes an automatic gain control (AGC) amplifier, and 9 a control circuit (which detects transmission distortion or the shapes of spectrum of the incoming signals) to control equalizers 21 and 22. The AGC amplifier 8 is provided for making the output level constant; therefore, it may be omitted if it is used exclusively for equalizing the frequency characteristics. The reference numeral 201' denotes an input signal terminal, while 202' denotes an output signal terminal.

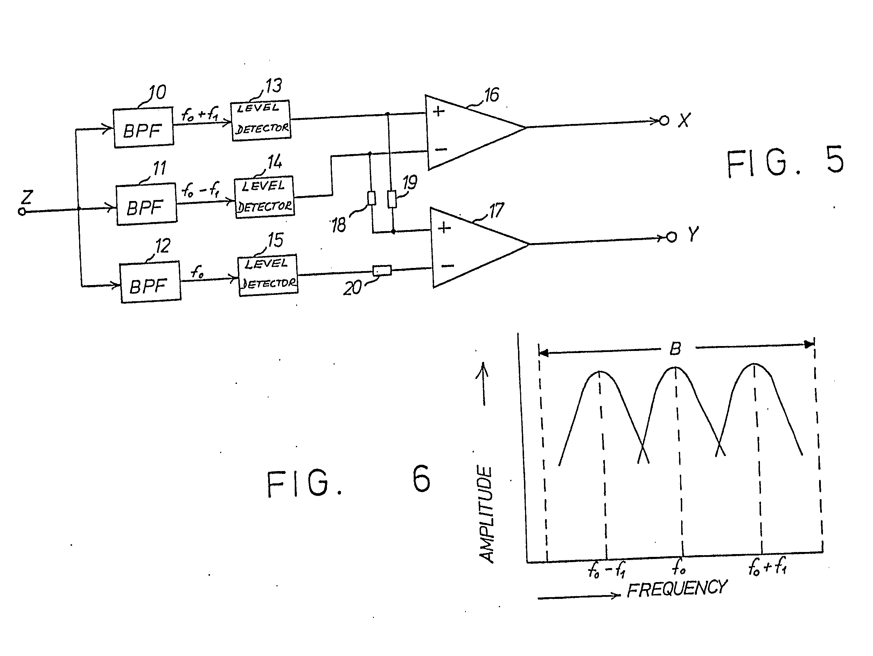

In the control circuit 9 shown in Fig. 5, the reference numerals 10, 11 and 12 denote respectively narrow band-pass filters whose center frequencies are respectively $(fo+f_1)$, $(fo-f_1)$ and fo

(where fo is the center frequency of the signal frequency band and $f_1$ is a predetermined frequency). The reference numerals 13, 14 and 15 denote level detectors; 16 and 17, differential amplifiers; and 18—20, resistors.

In Fig. 6, showing the amplitude vs. frequency characteristics of the filters 10—12, B denotes a signal frequency band width. The differential amplifier 16 compares the outputs from the level detectors 13 and 14, i.e. signal components of the frequencies $fo+f_1$ and $fo-f_1$ to pick up the linear slope components and the polarity thereof. The differential amplifier 17, on the other hand, compares the mean output from the level detectors 13 and 14 with the output of the level detector 15, i.e. the signal components near fo to take out the secondary or high order curvature components and the polarity thereof. If it equalizes only the linear slope components, the filter 12, the detector 15 and the differential amplifier 17 may be omitted, while if it equalizes only the secondary or higher order curvature components, the differential amplifier 16 may be omitted. The output signals X and Y from the differential amplifiers 16 and 17 are supplied to the terminal 107 of the circuits 21 and 22.

The variable amplitude equalizer shown in Fig. 7 comprises a branching circuit 201, delay circuits 202 and 203, combining circuits 204 and 206 and a signal-polarity-amplitude variable circuit 205. The delay time in the delay circuit 203 is twice as long as the delay circuit 202. The circuit 205 has a structure identical with circuit 6 in Fig. 1.

From the above mentioned description it will easily be understood that the characteristics of this variable equalizer are the same as in the variable equalizer shown in Fig. 1.

As has been described in the foregoing, the present invention provides an amplitude equalizer wherein desirable frequency regions and the maximum equalizable amplitude can be arbitrarily selected by simply varying either amplitude factor or attenuation factor $\alpha$, provided delay time $(\tau, 2\tau)$ is chosen appropriately. Moreover, the equalizer according to the present invention is suitable for equalizing secondary or high order curvature distortion because flat-delay is achieved over all the frequency region.

## Claims

1. An amplitude equalizer for equalizing signals having an amplitude distortion within a predetermined frequency band, by branching said signals into a first signal and a second signal having an effective delay time twice as long as the delay time of the first signal, the equalizer comprising
   a) a first branching circuit (1) for branching said signals to be equalized into two,
   b) a first delay circuit (2) connected to one of the outputs of said first branching circuit (1) and having a predetermined delay time within said frequency band, characterized by
   c) a second branching circuit (3) for branching the output signal from said first delay circuit (2) into two,

d) a second delay circuit (5) connected to one of the outputs of said second branching circuit (3) and having a delay time equal to said predetermined delay time,

e) a first combining circuit (4) for combining the other output from said first branching circuit (1) and the output from said second delay circuit (5),

f) a circuit (6) for varying the amplitude and polarity of the output signal from said first combining circuit (4), and

g) a second combining circuit (7) for combining the other output from said second branching circuit (3) and the output from said amplitude-polarity varying circuit (6) to provide equalized signals.

2. An amplitude equalizer for equalizing signals having an amplitude distortion within a predetermined frequency band, by branching said signals into at least a first signal and a second signal having an effective delay time twice as long as the delay time of the first signal, characterized by

a) a branching circuit (201) for branching said signals to be equalized into three,

b) a first delay circuit (202) connected to the first output from said branching circuit (201) and having a predetermined delay time within said frequency band,

c) a second delay circuit (203) connected to the second output from said branching circuit (201) and having a delay time twice as long as said delay time of said first delay circuit (202),

d) a first combining circuit (204) for combining the third output from said branching circuit (201) and the output from said second delay circuit (203),

e) a circuit (205) for varying the amplitude and polarity of the output signal from said first combining circuit (204), and

f) a second combining circuit (206) for combining the output from said first delay circuit (202) and the output from said amplitude-polarity varying circuit (205) to provide equalized signals.

3. An amplitude equalizer according to claim 1 or 2, wherein the amplitude-polarity varying circuit (6; 205) comprises a balanced mixer.

4. An amplitude equalizer device including an input signal terminal to be fed with signals having an amplitude distortion within a predetermined frequency band and an output signal terminal, comprising a plurality of amplitude equalizers (21, 22) according to any of claims 1 to 3 provided in series between said input signal terminal (201') and said output signal terminal (202') and control means (8, 9) connected to the output of the final stage (22) of said amplitude equalizers for detecting the amplitude vs. frequency characteristics of said signals to provide a control signal for controlling the amplitude-polarity varying circuits (6; 205) of the equalizers (21, 22).

**Patentansprüche**

1. Amplitudenentzerrer zum Entzerren von Signalen mit verzerrter Amplitude in einem vorgegebenen Frequenzband, durch Verzweigen der Signale in ein erstes Signal und ein zweites Signal, dessen effektive Verzögerung doppelt solang ist wie die des ersten Signals, mit

a) einem ersten Verzweigungsschaltkreis (1) zum Verzweigen der zu entzerrenden Signal in zwei Signale,

b) einem ersten Verzögerungsschaltkreis (2) der mit einem Ausgang des ersten Verzweigungsschaltkreises (1) verbunden ist und in dem genannten Frequenzband eine vorgegebene Verzögerung aufweist, gekennzeichnet durch

c) einen zweiten Verzweigungsschaltkreis (3) zum Verzweigen des Ausgangssignals des ersten Verzögerungsschaltkreises (2) in zwei Signale,

d) einen zweiten Verzögerungsschaltkreis (5), der mit einem Ausgang des zweiten Verzweigungsschaltkreises (3) verbunden ist und dessen Verzögerung gleich der vorgegebenen Verzögerung ist,

e) einen ersten Kombinationsschaltkreis (4) zum Kombinieren des anderen Ausgangs des ersten Verzweigungsschaltkreises (1) mit dem Ausgang des zweiten Verzögerungsschaltkreises (5),

f) einen Schaltkreis (6) zum Variieren der Amplitude und der Polarität des Ausgangssignals des ersten Kombinationsschaltkreises (4) und durch

g) einen zweiten Kombinationsschaltkreis (7) zum Kombinieren des anderen Ausgangs des zweiten Verzweigungsschaltkreises (3) mit dem Ausgang des die Amplitude und die Polarität variierenden Schaltkreises (6) zum Erzeugen entzerrter Signale.

2. Amplitudenentzerrer zum Entzerren von Signalen mit verzerrter Amplitude in einem vorgegebenen Frequenzband durch Verzweigen der Signale in mindestens ein erstes Signal und ein zweites Signal, dessen effektive Verzögerung doppelt so lang ist wie die Verzögerung des ersten Signals, gekennzeichnet durch

a) einen Verzweigungsschaltkreis (201) zum Verzweigen der zu entzerrenden Signale in drei Signale,

b) einen ersten Verzögerungsschaltkreis (202) der mit dem ersten Ausgang des Verzweigungsschaltkreises (201) verbunden ist und in dem Frequenzband eine vorgegebene Verzögerung aufweist,

c) einen zweiten Verzögerungsschaltkreis (203), der mit dem zweiten Ausgang des Verzweigungsschaltkreises (201) verbunden ist und dessen Verzögerung doppelt so lang ist wie die Verzögerung des ersten Verzögerungsschaltkreises (202),

d) einen ersten Kombinationsschaltkreis (204) zum Kombinieren des dritten Ausgangs des Verzweigungsschaltkreises (201) mit dem Ausgang des zweiten Verzögerungsschaltkreises (203),

e) einen Schaltkreis (205), zum Variieren der Amplitude und der Polarität des Ausgangssignals des ersten Kombinationsschaltkreises (204) und durch

f) einen zweiten Kombinationsschaltkreis (206) zum Kombinieren des Ausgangs des ersten Verzögerungsschaltkreises (202) mit dem Ausgang des die Amplitude und die Polarität variierenden Schaltkreises (205) zum Erzeugen entzerrter Signale.

3. Amplitudenentzerrer nach Anspruch 1 oder 2, dadurch gekennzeichnet, daß der die Amplitude und die Polarität variierenden Schaltkreis (6; 205) eine Gegentaktmischstufe aufweist.

4. Amplitudenentzerrerschaltung mit einem Eingangsanschluß, dem Signale mit verzerrter Amplitude in einem vorgegebenen Frequenzband zugeführt werden, und einem Ausgangsanschluß, gekennzeichnet durch mehrere Amplitudenentzerrer (21, 22) nach einem der Ansprüche 1 bis 3, die zwischen dem Eingangsanschluß (201') und dem Ausgangsanschluß (202') in Serie geschaltet sind, und durch eine mit dem Ausgang der Endstufe (22) der Amplitudenentzerrer verbundenen Steuerschaltung (8, 9) zum Feststellen der Amplituden-Frequenz-Kennlinie der Signale, um ein Steuersignal zum Ansteuern der die Amplitude und die Polarität variierenden Schaltkreise (6; 205) der Entzerrer (21, 22) zu erzeugen.

**Revendications**

1. Egaliseur d'amplitude pour l'égalisation de signaux ayant une distorsion d'amplitude à l'intérieur d'une bande de fréquence prédéterminée, par branchement des signaux dans un premier signal et un second signal ayant un temps de retard effectif double de celui du premier signal, l'égaliseur comprenant:

a) un premier circuit de branchement (1) pour brancher les signaux à égaliser dans deux,

b) un premier circuit à retard (2) connecté à l'une des sorties du premier circuit de branchement (1) et ayant un temps de retard prédéterminé à l'intérieur de la bande de fréquence, caractérisé par:

c) un second circuit de branchement (3) pour brancher le signal de sortie provenant du premier circuit à retard (2) dans deux,

d) un second circuit à retard (5) connecté à l'une des sorties du second circuit de branchement (3) et ayant un temps de retard égal au temps de retard prédéterminé,

e) un premier circuit de combinaison (4) pour combiner l'autre sortie du premier circuit de branchement (1) et la sortie du second circuit à retard (5),

f) un circuit (6) pour faire varier l'amplitude et la polarité du signal de sortie en provenance du premier circuit de combinaison (4) et

g) un second circuit de combinaison (7) pour combiner l'autre sortie du second circuit de branchement (3) et la sortie du circuit (6) faisant varier l'amplitude-polarité afin de fournir des signaux égalisés.

2. Egaliseur d'amplitude pour l'égalisation de signaux ayant une distorsion d'amplitude à l'intérieur d'une bande de fréquence prédéterminée, par branchement des signaux dans au moins un premier signal et un second signal ayant un temps de retard effectif double du temps de retard du premier signal, caractérisé par:

a) un circuit de branchement (201) pour brancher les signaux à égaliser dans trois,

b) un premier circuit à retard (202) connecté à la première sortie du circuit de branchement (201) et ayant un temps de retard prédéterminé à l'intérieur de la bande de fréquence,

c) un second circuit à retard (203) connecté à la seconde sortie du circuit de branchement (201) et ayant un temps de retard double de celui du premier circuit à retard (202),

d) un premier circuit de combinaison (204) pour combiner la troisième sortie du circuit de branchement (201) et la sortie du second circuit à retard (203),

e) un circuit (205) pour faire varier l'amplitude et la polarité du signal de sortie provenant du premier circuit de combinaison (204), et

f) un second de combinaison (206) pour combiner la sortie du premier circuit à retard (202) et la sortie du circuit (205) faisant varier l'amplitude-polarité afin de fournir des signaux égalisés.

3. Egaliseur d'amplitude selon la revendication 1 ou la revendication 2, où le circuit (6; 205) faisant varier l'amplitude-polarité comprend un mélangeur équilibré.

4. Dispositif à égaliseur d'amplitude comportant une borne de signaux d'entrée devant être alimentée avec des signaux ayant une distorsion d'amplitude à l'intérieur d'une bande de fréquence prédéterminée et une borne de signaux de sortie, comprenant une pluralité d'égaliseurs d'amplitude (21, 22) selon l'une quelconque des revendications 1 à 3, prévue en série entre la borne de signaux d'entrée (201') et la borne de signaux de sortie (202') et un moyen de commande (8, 9) connecté à la sortie de l'étage final (22) des égaliseurs d'amplitude pour détecter la caractéristique de l'amplitude en fonction de la fréquence des signaux et fournir un signal de commande pour la commande des circuits (6; 205) faisant varier l'amplitude-polarité des égaliseurs (21, 22).

FIG. 1

FIG. 2

# FIG. 3

# FIG. 7

FIG. 4

FIG. 5

FIG. 6